## Europäisches Patentamt

## European Patent Office

## Office européen des brevets

(19)

(11) Numéro de publication: **0 180 683**

**B1**

(12)

# FASCICULE DE BREVET EUROPÉEN

(45) Date de publication du fascicule du brevet:
**16.03.88**

(51) Int. Cl.⁴: **B 60 P 1/64,** B 60 P 1/04

(21) Numéro de dépôt: **84440076.2**

(22) Date de dépôt: **27.12.84**

(54) **Dispositif pour basculer des charges.**

(30) Priorité: **30.10.84 FR 8416965**

(43) Date de publication de la demande:
**14.05.86 Bulletin 86/20**

(45) Mention de la délivrance du brevet:
**16.03.88 Bulletin 88/11**

(84) Etats contractants désignés:
**AT BE CH DE GB IT LI LU NL SE**

(56) Documents cité:
**FR-A-1 599 182**
**FR-A-2 002 222**
**FR-A-2 154 896**
**FR-A-2 296 544**

(73) Titulaire: **BENALU S.A., 108 rue Pierre Brossolette,
F-62110 Henin- Beaumont (Pas- de- Calais) (FR)**

(72) Inventeur: **Neveux, Pierre, 13 rue Van Gogh,
F-59500 Cuincy (Nord) (FR)**

(74) Mandataire: **Lepage, Jean- Pierre, Cabinet Lepage
& Aubertin Innovations et Prestations 23/25, rue
Nicolas Leblanc B.P. 1069, F-59011 Lille Cédex 1
(Nord) (FR)**

LIBER, STOCKHOLM 1988

## Description

L'invention est relative à un dispositif pour basculer des charges. Elle trouvera son application dans le domaine du transport par conteneurs et sera notamment destiné pour décharger des conteneurs de différents gabarits.

Pour effectuer le transport de différents produits d'un point à un autre, notamment des produits en vrac, on utilise couramment des conteneurs spéciaux ou des caisses mobiles prévus à cet effet. Ces conteneurs sont utilisés pour le transport par voies routières ou ferroviaires, et également par voies maritimes ou aériennes.

De tels conteneurs sont construits en respectant les dimensions internationales normalisées et présentent à chacun de leurs coins des pièces de coin normalisées permettant d'avoir une fixation et une préhension adaptées à tous les moyens de transport connus. Il existe notamment de tels conteneurs dont le gabarit est de 20, 30 ou 40 pieds (6.1, 9.15 ou 12.2 m).

Dans le cas de transports de produits en vrac, pour faciliter le déchargement, le conteneur présente une ouverture telle que porte, trappe, vanne ou autre qui permet de décharger les produits contenus lorsque l'on bascule le conteneur. Pour permettre ce déchargement, on rend fixe la partie arrière du conteneur et on soulève la partie avant par un système élévateur comprenant notamment un vérin et un tablier élévateur.

L'avantage du transport dans de tels conteneuis réside par le fait qu'on peut faire voyager le contenu par différentes voies de transport sans être obligé de décharger les produits dans d'autres bennes ou contenants, en effet, les conteneurs étant de dimensions normalisées, on peut les utiliser sur n'importe quel moyen de transport.

Par contre, lorsque le conteneur arrive à sa destination finale, pour pouvoir le décharger, il faut que le dernier moyen de transport soit équipé d'un système élévateur pour le basculer.

A titre d'exemple, il est connu du document FR-A-2 154 896 un véhicule porte-conteneur notamment destiné au transport de matières en vrac.

Le problème résolu par cette invention est de proposer un véhicule qui permette de transporter un conteneur, ce dernier étant verrouillé de manière amoviable au châssis, puis d'autoriser le déchargement par basculement du conteneur et enfin de permettre la séparation conteneur-véhicule.

A cet égard, le véhicule décrit dans le brevet FR-A-2 154 896 comporte d'une part un châssis porte-conteneur basculant, placé à l'avant du véhicule, et un dispositif de soul èvement placé à l'arrière du véhicule. Ainsi, on peut d'une part vider le conteneur et d'autre part le dégager du véhicule en le laissant reposer sur des béquilles.

Le principal inconvénient de ces dispositifs de basculement de charge réside dans le fait qu'ils sont montés à poste fixe sur les moyens de transport, ce qui oblige donc à posséder différents types de véhicules sulvant les différents gabarits des conteneurs transportés.

Le principal but de la présente invention est de proposer un dispositif pour basculer des charges, notamment destiné pour décharger des conteneurs de différents gabarits, qui soit déplaçable pour ajuster la position du vérin et/ou du bouclier élévateur au gabarit du conteneur et qui soit stable en appui franc pendant l'utilisation de l'élévateur pour décharger le conteneur.

Un autre objet de la présente invention est de proposer un dispositif pour basculer les charges qui puisse être monté sur un véhicule de transport tel que notamment une remorque de camion tractée ou un semi-remorque, présentant des moyens facilitant son adaptation à la dimension du conteneur à transporter.

Selon la présente invention, le dispositif pour basculer des charges, notamment destiné pour décharger des conteneurs, comportant un système élévateur à tablier, placé sur une structure résistante, constitué notamment d'un vérin fixé sur un châssis et d'un tablier élévateur, est caractérisé par le fait qu'il comporte des moyens escamotables reliés au châssis pouvant faire prendre au dit châssis une première position dans laquelle il est en appui franc sur la structure en vue de l'utilisation du verin, et une deuxième position dans laquelle il peut être déplacé longitudinalement sur la structure pour ajuster la position du vérin au garbarit du conteneur.

D'autres buts et avantages de la présente invention appparaîtront au cours de la description qui va suivre, qui n'est donnée qu'à titre indicatif et qui n'a pas pour but de la limiter.

L'invention sera mieux comprise si l'on se réfère à la description ci-dessous, ainsi qu'aux dessins en annexe qui font partie intégrante.

La figure 1 représente une remorque tractée équipée d'un dispositif pour basculer des charges réalisé selon la présente invention.

La figure 2 représente une vue de face d'un dispositif réalisé selon la présente invention.

La figure 3 représente une vue en coupe selon l'axe III-III de la figure 2.

La figure 4 représente un détail du dispositif réalisé selon la présente invention en position d'utilisation.

La figure 5 représente un détail du dispositif réalisé selon la présente inventionr en position déplacement.

Pour effectuer le transport de certaines produits en vrac nécessitant un transport utilisant d'autres voies que les voies routières, il est intéressant d'utiliser des conteneurs aptes à être basculés. Ces conteneurs présentent des dimensions internationales normalisées ce qui permet de les transporter notamment par voies routières, ferroviaires, aériennes, ou navigables. Néanmoins, la dernière partie de leur voyage s'effectue principalement par voies routières, ce qui permet de les amener à n'importe quelle destination précise.

Actuellement, les conteneurs normalisés présentent le plus souvent trois gabarits différents, il slagit notamment de conteneurs dits de 20 pieds, 30 pieds ou 40 pieds. Par contre, ils présentent tous à chacun de leur coin des pièces de coin qui présentent des dimensions et des ouvertures normalisées. Ce sont ces pièces de coin qui permettent la manutention des différents conteneurs ainsi que leur arrimage sur les différents moyens de transport utilisés.

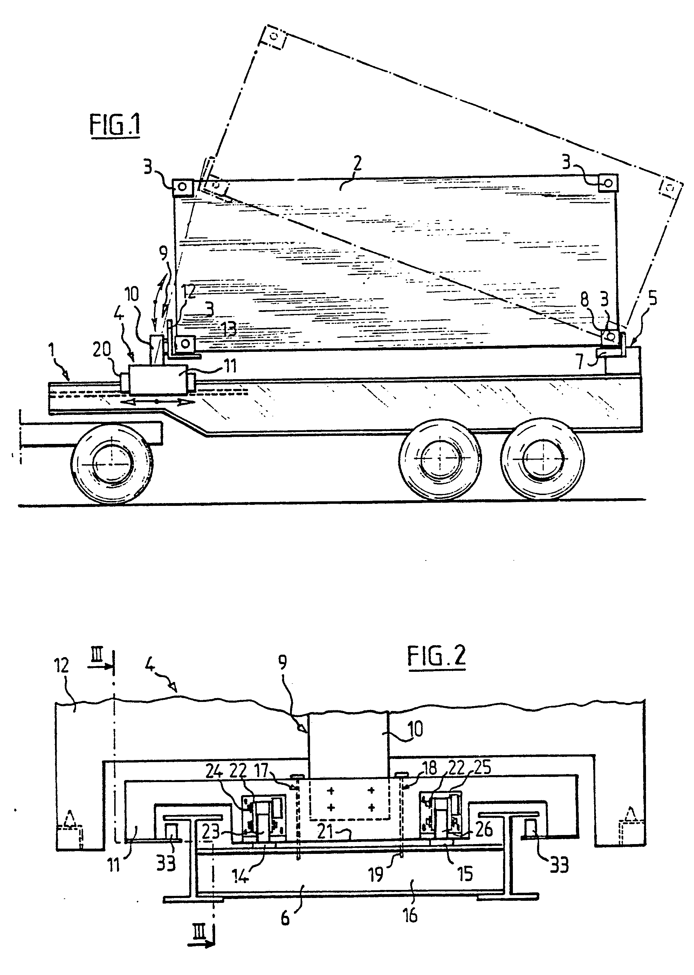

La figure 1 représente une remorque tractée 1 destinée au transport de conteneurs 2 de gabarits normalisés et présentant des pièces de coin 3.

La remorque 1 présente en outre des moyens pour faciliter le vidage du dit conteneur 2 lors de son arrivée à destination. Ces dits moyens sont essentiellement constitués par un dispositif 4 pour basculer des charges et par un dispositif 5 autorisant la rotation du conteneur par rapport à une de ses arêtes, ces deux dispositifs 4 et 5 étant disposés sur la structure résistante 6 de la remorque.

Le dispositif 5 permettant la rotation du conteneur est notamment constitué par une pièce en forme de cornière 7, mobile autour d'un axe, comportant un système de verrouillage apte à prendre place dans les pièces de coins 8 placées aux deux coins inférieurs arrière du conteneur 2. Ces sytèmes de verrouillage sont constitués par des dispositifs connus de l'Homme de l'Art ne faisant pas partie de l'objet de la présente invention.

Le dispositif 4 pour basculer les charges comportent essentieilement un système élévateur à tablier placé sur la structure résistante 6 de la remorque. Ce sytème 9 est notamment constitué d'un vérin 10 fixé sur un chassis 11 et d'un tablier élévateur 12.

De tels systèmes élévateurs 9 sont également connus de l'Homme de l'Art, ils sont conçus de telle sorte qu'ils soient aptes à lever le conteneur en charge. Le vérin est généralement du type hydraulique et le tablier élévateur 12 comporte des moyens d'articulation autorisant un déplacement respectif du tablier par rapport à la tige de vérin.

En outre, le tablier élévateur 12 comporte des moyens de verrouillage aptes à prendre prise dans la pièce de coin 13 située dans les coins inférieurs avant du conteneur 2. Ces dispositifs de verrouillage seront avantageusement du même type que ceux placés sur le dispositif 5 d'articulation.

Pour éviter de spécialiser les remorques porteuses à un seul gabarit de conteneur, il est intéressant de pouvoir ajuster la position du système élévateur 9 par rapport aux différents gabarits de conteneurs couramment utilisés.

Selon la présente invention, le dispositif 4 pour basculer des charges comporte des moyens escamotables reliés au châssis 11 pour assurer sa stabilité, le dit châssis 11 étant en appui franc sur la structure 6 pendant l'utilisation du vérin 10 et pour qu'il soit mobile sur la structure 6 pour ajuster la position du vérin 10 au gabarit des conteneurs.

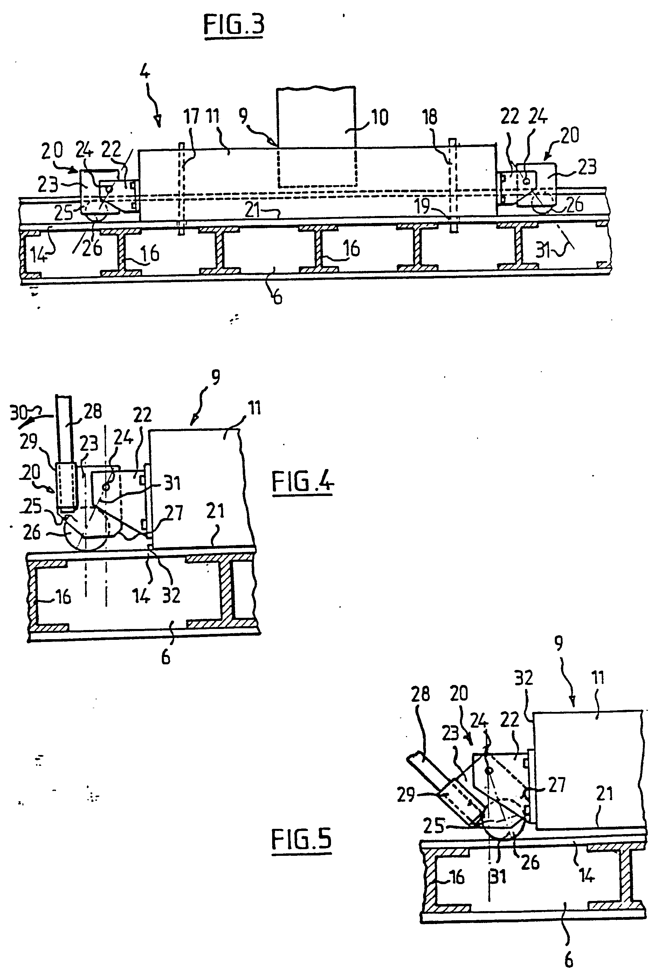

La figure 2 représente une vue de face du dispositif 4 pour basculer les charges mises en place sur la structure résistante 6. La figure 3 représente ce même dispositif vue de côté selon l'axe III-III de la figure 2.

Ces deux figures montrent un dispositif 4 réalisé selon un mode préférentiel de la présente invention. La structure résistante 6 comporte à sa partie supérieure deux chemins de roulement 14 et 15 fixés sur des traverses latérales 16 de renfort. Les deux chemins de roulement 14 et 15 forment un plan sur lequel on pose la partie inférieure du châssis 11 supportant le vérin 10.

Ce châssis repose par son propre poids sur la structure résistante 6 et comporte notamment des moyens de verrouillage 17 du châssis 11 sur la structure 6 en position d'utilisation.

Ces moyens de verrouillage 17 sont avantageusement constitués par quatre broches 18 pénétrant dans des orifices 19 pratiqués dans la structure résistante 6. Ces broches empêchent notamment au châssis de glisser sur les chemins de roulement 14 et 15 lorsque le vérin 10 est utilisé pour basculer et décharger un conteneur.

En outre, le châssis comporte également des dispositifs 33 anti-basculeurs prenant dans la structure résistante 6 et évitant au châssis 11 de dérailler ou de basculer durant les opérations de vidage ou même durant le transport.

Selon le mode de réalisation proposé, les moyens escamotables sont notamment disposés de chaque côté du châssis 11 et sont solidaires de celui-ci. Ils sont notamment constitués par des systèmes excentriques 20 permettant à la base 21 du châssis 11 de reposer en appui sur les chemins de roulement 14 et 15 de la structure 6 ou de la désolidariser de la structure.

Dans un mode de réalisation préférentiel, sur le châssis 11, de part et d'autre de celui-ci, sont disposées deux chappes 22 aptes à recevoir chacune une came excentrique 23, la dite came étant mobile autour d'un axe 24 porté par la chappe 22.

En outre, selon le mode de réalisation proposé, les systèmes excentriques 20 comportent des moyens de roulement pour translater le dit châssis 11 sur les chemins de roulement 14 et 15 de la structure 6 et des moyens de butée sur le châssis 11.

En effet, les cames excentriques 23 sont notamment constituées par deux flasques parallèles 25 entre lesquels est monté un galet de roulement 26 qui peut rouler sur les chemins de roulement 14 ou 15 de la structure 6. De plus, les flasques 25 de la came excentrique 23 comportent un plat 27 qui sert de butée sur la chappe support 22.

Les figures 4 et 5 montrent le fonctionnement des moyens escamotables, la figure 4 représente le châssis 11 en appui franc sur la structure 6, la figure 5 montre le châssis 11 désolidarisé de la structure 6.

Dans un mode de réalisation particulier, les moyens escamotables sont manoeuvrés manuellement. En effet, un bras de levier 28 est introduit dans un manchon 29 solidaire des flasques 25 de la came excentrique 23.

En position d'utilisation vérin, le châssis 11 a sa base 21 qui repose sur les deux chemins de roulement 14 et 15 de la structure résistante 6. Le coefficient de frottement entre ces différents éléments est tel qu'il est difficilement envisageable de translater le chariot 11 en effectuant une poussée sur celui-ci; en effet, le poids propre du système élévateur 9 est tel que l'effort de poussée nécessaire à déplacer le chariot 11 est trop important.

Il est à remarquer que lorsque le châssis 11 est en position appui franc, la came excentrique 23 est libre de rotation autour de l'axe 24 jusqu'au moment où le galet 26 vient en contact avec le chemin de roulement 14.

Lorsqu'on exerce sur le bras de levier 28 un effort dirigé dans le sens de la flèche 30 de la figure 4, on tend à faire passer l'axe 31 de l'excentrique à la verticale et de ce fait on soulève légèrement la face 21 du châssis 11, ceci par l'intermédiaire de l'axe 24 et de la chappe 22.

Lorsque l'axe 31 de l'excentrique 23 a dépassé la verticale, on peut cesser l'effort exercé sur le bras de levier 28, en effet le poids propre du châssis 11 tend à déplacer l'axe 31 vers la face 32 du châssis, ce mouvement étant arrêté par le plat 27 des flasques 22 qui vient alors en butée sur la chappe 22 comme le montre la figure 5.

On procède de la même manière sur tous les systèmes excentriques 20 solidaires du châssis 11 et on peut ainsi soulever la face 21 du châssis 11 des chemins de roulement 14 et 15 de manière à pouvoir déplacer ce châssis, le poids propre du système élévateur 9 étant supporté par les différents galets de roulement 26 des systèmes excentriques 20; il devient alors facile de vaincre la résistance au roulement de l'ensemble.

Le système élévateur 9 peut être alors déplacé le long de la structure résistante pour ajuster la position du vérin 10 au gabarit du conteneur 2. Pour assurer de nouveau la stabilité du châssis 11 sur la structure 6, il suffit de procéder de la manière inverse de telle sorte à refaire passer l'axe 31 de l'excentrique 20 de l'autre côté de la verticale et de revenir à la position telle que représentée à la figure 4. Dans un mode de réalisation particulier, les moyens escamotables dont la manoeuvre manuelle vient d'être décrite peuvent être manoeuvrés automatiquement par des dispositifs mécaniques tels que notamment des vérins fournissant les efforts nécessaires sur les bras de levier 28.

Grâce aux dispositions qui viennent d'être décrites, on peut donc notamment utiliser une même remorque tractée pour transporter et pour décharger des conteneurs de différents gabarits en adaptant la position du système élévateur aux gabarits des conteneurs.

**Revendications**

1. Dispositif pour basculer des charges (4), notamment destiné pour décharger des conteneurs (2), comportant un système élévateur (9) à tablier, placé sur une structure résistante (6), constitué notamment d'un vérin (10) fixé sur un châssis (11) et d'un tablier élévateur (12), caractérisé par le fait qu'il comporte des moyens escamotables reliés au châssis (11) pouvant faire prendre au dit châssis (11) une première position dans laquelle il est en appui franc sur la structure (6) en vue de l'utilisation du vérin (10), et une deuxième position dans laquelle il peut être déplacé longitudinalement sur la structure (6) pour ajuster la position du vérin (10) au gabarit du conteneur (2).

2. Dispositif pour basculer des charges selon la revendication 1, caractérisé par le fait que les dits moyens escamotables, disposés sur le châssis (11) sont constitués dans des systèmes excentriques (20) permettant à la base (21) du châssis (11) de reposer en appui sur la structure (6) ou de la désolidariser de la structure (6).

3. Dispositif pour basculer des charges selon la revendication 2, caractérisé par le fait que les systèmes excentriques (20) comprennent des moyens de roulement pour translater le dit châssis (11) sur la structure (6) et des moyens de butée sur le châssis (11).

4. Dispositif pour basculer des charges selon les revendications 2 et 3, caractérisé par le fait que les dits moyens escamotables sont constitués par une came excentrique (23) supportée par une chappe support (22), mobile autour d'un axe (24) porté par la chappe (22), présentant un galet de roulement (26) monté entre deux flasques (25), les deux flasques (25) venant en butée sur la chappe support (22).

5. Dispositif pour basculer des charges selon la revendication 1, caractérisé par le fait qu'il comporte des moyens de verrouillage (17) du châssis (11) sur la structure (6) en position d'utilisation.

6. Dispositif pour basculer des charges selon la revendication 1, caractérisé par le fait que les moyens escamotables sont manoeuvrés manuellement par action sur un bras de levier (28).

7. Dispositif pour basculer des charges selon la revendication 1, caractérisé par le fait que les moyens escamotables sont manoeuvrés par des dispositifs mécaniques automatiques.

**Patentansprüche**

1. Vorrichtung zum Kippen von Lasten (4) insbesondere zum Entladen von Containern (2), mit einer Hubanlage (9) mit Hebetisch, die auf einer festen Struktur (6) angebracht ist, hauptsächlich bestehend aus einer auf einem Rahmen (11) befestigten Winde (10) und einem Hebetisch (12), dadurch gekennzeichnet, dass sie einen mit dem Rahmen (11) verbundenen, versenkbaren Element enthält, der es ermöglicht, den genannten Rahmen (11) in eine erste Stellung zu bringen, in der er direkt auf der Struktur (6) aufliegt, so dass die Winde (10) benutzt werden kann, und in eine zweite Stellung, in der er auf der Struktur (6) in Längsrichtung so gleiten kann, dass die Lage der Winde (10) der Grösse des Containers (2) angepasst werden kann.

2. Vorrichtung zum Kippen von Lasten nach Anspruch 1, dadurch gekennzeichnet, dass der genannte versenkbare Element der auf dem Rahmen (11) befestigt ist, aus exzentrischen Systemen (20) besteht, so dass das Fundament (21) des Rahmens (11) sowohl auf der Struktur (6) aufliegen als auch von ihr getrennt werden kann.

3. Vorrichtung zum Kippen von Lasten nach Anspruch 2, dadurch gekennzeichnet, dass die exzentrischen Systeme (20) Rollen zum Verschieben des genannten Rahmens (11) auf der Struktur (6) sowie Anschläge auf dem Rahmen (11) haben.

4. Vorrichtung zum Kippen von Lasten nach Anspruch 2 und 3, dadurch gekennzeichnet, dass der genannte versenkbare Element aus einer exzentrischen Nocke (23) besteht, die auf einem Stützbügel (22) aufliegt, sich um eine auf dem Bügel (22) aufliegende Achse (24) dreht und eine Walze (26) hat, die zwischen zwei Flansche (25) montiert ist, welche auf dem Stützbügel (22) einen Anschlag haben.

5. Vorrichtung zum Kippen von Lasten nach Anspruch 1, dadurch gekennzeichnet, dass er eine Verriegelung (17) des Rahmens (11) auf der Struktur (6) in der Benutzungsstellung hat.

6. Vorrichtung zum Kippen von Lasten nach Anspruch 1, dadurch gekennzeichnet, dass der versenkbare Elemant über einen Hebelarm (28) von Hand betätigt wird.

7. Vorrichtung zum Kippen von Lasten nach Anspruch 1, dadurch gekennzeichnet, dass der versenkbare Element über eine automatische Mechanik betätigt wird.

## Claims

1. A device for rocking charges (4), in particular intended to unload containers (2), comprising an elevator system (9) with an apron, located on a strong structure (6), particularly composed of a jack (10) fastened to a frame (11) and an elevator apron (12), characterized by the fact that it comprises retractable means connected with the frame (11) being able to impose a first position upon the frame, in which it takes its clear bearing on the structure (6) in order to use the jack (10), and a second position in which it can longitudinally be moved on the structure (6) in order to adjust the position of the jack (10) to the outline of the container (2).

2. A device for rocking charges according to claim 1, characterized by the fact that said retractable means, located on the frame (11), are formed as eccentric systems (20) allowing to the basis (21) of the frame (11) to lie while leaning on the structure (6) or to disconnect it from the structure (6).

3. A device for rocking charges according to claim 2, characterized by the fact that the eccentric systems (20) comprise rolling means in order to move said frame (11) on the structure (6) and butting means on the frame (11).

4. A device for rocking charges according to the preceding claims 2 and 3, characterized by the fact that said retractable means are composed of an eccentric cam (23) supported by a covering support (22), mobile around a axis (24) borne by the covering (22), having a roller (26) mounted between two cheeks (25), these two cheeks (25) butting against the covering support (22).

5. A device for rocking charges according to claim 1, characterized by the fact that it comprises bolting means (17) of the frame (11) on the structure (6) in use position.

6. A device for rocking charges according to claim 1, characterized by the fact that the retractable means are manually actuated by the action of a lever arm (28).

7. A device for rocking charges according to claim 1, characterized by the fact that the retractable means are actuated by automatic mechanical devices.

FIG.1

FIG.2

## FIG.3

## FIG.4

## FIG.5